# EUROPEAN PATENT APPLICATION

(11) **EP 2 017 779 A2**
(43) Date of publication of application: **21.01.2009**
(21) Application number: 08104730.0
(22) Date of filing: 11.07.2008
(51) Int. Cl.: G06Q 20/00, G07F 7/10

(54) **A Method for account balance transfer**

(30) Priority: 12.07.2007 TR 200704888
(71) Applicant: Fonoklik Iletisim Hizmetleri ve Ticaret Anonim Sirketi, 34398 Istanbul (TR)
(72) Inventor: Yurekli, Ahmet, Istanbul (TR)
(74) Representative: Dericioglu, Ekin

(57) **Abstract**

The invention is related to a method for account balance transfer to transfer the account balance of one credit card to another credit card.

## Description

### Technical Field

The invention is related to a method for account balance transfer to transfer the account balance of one credit card to another credit card.

### Prior Art

In the state of the art, to settle balance of a credit card account by using another credit card, credit or cash advance from the credit card to be used in payment is required to be transferred to the credit card account in debt by means of electronic funds transfer. Transactions carried out with this method take long time and thus risk of making error by the user during the transaction increases.

AU 2003266781, one of the embodiments in the state of the art, discloses a system based on a database including information on the users and the payment to be made and providing authorization for the payment by telephone or e-mail to facilitate payment for the users. This method suggests a different solution for the abovementioned problem; however, it does not provide a significant facility in practice.

### Brief description of Invention

The object this invention is to provide a method for balance transfer enabling transfer of a debit balance of a credit card to another credit card.

### Detailed Description of Invention

The method for balance transfer in order to achieve the object of this invention is illustrated in the accompanying drawings, in which:

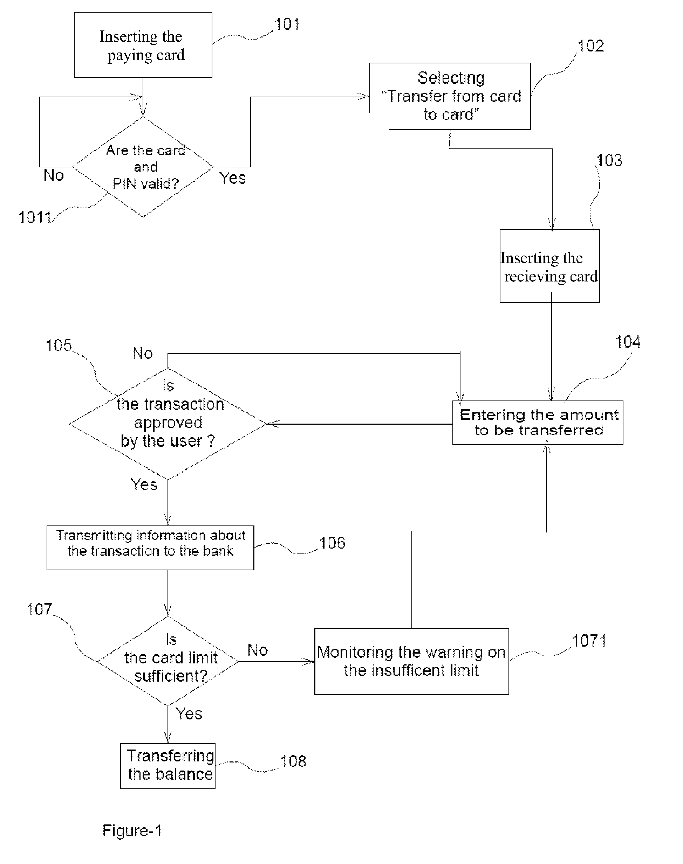

Figure 1 is a flow chart of method for balance transfer.
The method according to the invention comprises the steps of:
   - entering into the system with the card to be used to pay the debt of another card through an ATM (automated teller machine) or POS (point of sale) device and entering PIN (personal identity number) (101)
   - checking transaction feasibility of card and PIN entered (1011)
   - selecting the option of "Transfer debt balance from card to card" from the menu (102)
   - having the credit card with debt read by the reader of the same transaction terminal (103)
   - entering the amount to be transferred (104)
   - approval of the transaction to be made by the user (105)
   - transmitting the transaction details to the bank via a data network (106)
   - checking if the first card has sufficient credit limit available for the transaction (107)
   - sending a warning message by the transaction terminal used indicating that the transaction is not completed if the balance to be transferred exceeds the limit of the first card (1071)
   - transferring of the desired balance to the second card by electronic funds transfer (108).

In case an ATM is used in order to carry out this transaction, either the first card can be withdrawn from the ATM or can be kept in a slot in the ATM during the step (103). After completion of the transaction, both cards are taken out of the machine.

In steps (101) and/or (103), entering into the system with card is enabled by inserting the card into the transaction terminal or entering card number using keypad.

In another embodiment according to the invention, step (1011) is not performed, instead information about the checking process included in this step is transmitted to the bank together with the other details of the transaction in the step (106) and the related checking process is carried out via the step (1061) following the step (106).

## Claims

1. A method for balance transfer comprising the steps of
- entering into the system with the card to be used to pay the debt of another card through an ATM or POS device and entering PIN (101)
- checking transaction feasibility of card and PIN entered (1011)
- selecting the option of "Transfer debt balance from card to card" from the menu (102)
- having the credit card with debt read by the reader of the same transaction terminal (103)
- entering the amount to be transferred (104)
- approval of the transaction to be made by the user (105)
- transmitting the transaction details to the bank via a data network (106)
- checking if the first card has sufficient credit limit available for the transaction (107)
- sending a warning message by the transaction terminal used indicating that the transaction is not completed if the balance to be transferred exceeds the limit of the first card (1071)
- transferring of the desired balance to the second card by electronic funds transfer (108).

2. A method for balance transfer according to the Claim 1 **characterized** with inserting the card into the transaction terminal for steps (101) and (103) by.

3. A method for balance transfer according to Claim 1 **characterized** with entering the card number using keypad for steps (101) and (103).

4. A method for balance transfer according to Claim 1 **characterized** with inserting a card into the transaction terminal for one of the steps (101) and (103), and entering the card number using keypad for the other step.

5. A method for balance transfer according to Claims 2, 3 or 4 comprising the step (1061) checking the checking process carried out in the step (1011) instead of said step, following the step (106), and **characterized** with transfer of the related information about this checking process together with the other details of the transaction to the bank in step (106).
